# EUROPÄISCHE PATENTSCHRIFT

(11) **EP 0 694 147 B1**
(45) Veröffentlichungstag und Bekanntmachung des Hinweises auf die Patenterteilung: **23.07.1997**
(21) Anmeldenummer: 94913561.0
(22) Anmeldetag: 09.04.1994
(51) Int. Cl.: F23G 5/00, F23G 5/20, F23G 5/027, F23L 7/00, F27B 7/24

(54) **VERFAHREN ZUR REDUZIERUNG DER EMISSIONEN BEI DER VERBRENNUNG VON ABFÄLLEN**
METHOD OF REDUCING THE EMISSIONS PRODUCED BY INCINERATING WASTE
PROCEDE POUR LA REDUCTION D'EMISSIONS GAZEUSES LORS DE LA COMBUSTION DES DECHETS

(30) Priorität: 22.04.1993 DE 4313102
(43) Veröffentlichungstag der Anmeldung: 31.01.1996
(73) Patentinhaber: SBW SONDERABFALLENTSORGUNG BADEN-WÜRTTEMBERG GmbH, D-70136 Fellbach (DE)
(72) Erfinder: SCHUMANN, Bernd, D-13187 Berlin (DE); TELLER, Matthias, D-12305 Berlin (DE); MÄRZ, Herbert, D-70736 Fellbach (DE)
(74) Vertreter: Dreiss, Fuhlendorf, Steimle & Becker, Patentanwälte
(86) Internationale Anmeldenummer: EP9401101
(87) Internationale Veröffentlichungsnummer: WO9424484

(56) Entgegenhaltungen:
- EP-A- 0 495 766
- DE-A- 4 026 245
- DE-A- 4 218 628
- US-A- 5 179 903
- PATENT ABSTRACTS OF JAPAN vol. 8, no. 116 (M-299) 30. Mai 1984 & JP,A,59 024 115 (NIPPON FURNACE) 7. Februar 1984
- PATENT ABSTRACTS OF JAPAN vol. 2, no. 89 (C-17) 21. Juli 1978 & JP,A,53 048 079 (MITSUI ENG.) 5. Januar 1978

## Beschreibung

Die Erfindung betrifft ein Verfahren zur Reduzierung der Emissionen bei der Verbrennung von Abfällen in einer Verbrennungsanlage, bei dem ein Teil des bei der Verbrennung entstehenden Rauchgases als kontinuierlicher Kreislauf an den Eingang der Verbrennungsanlage zurückgeführt wird, bei dem dem zurückgeführten Rauchgas der zur Verbrennung erforderliche Sauerstoff als reiner Sauerstoff zur Bildung einer aus Rauchgas und reinem Sauerstoff zusammengesetzten synthetischen Luft zugemischt wird, wobei das Verhältnis von Rauchgas und Sauerstoff 4:1 bis 1:1, vorzugsweise 2:1 bis 1,5:1 ist, und bei dem dann die Verbrennung unter Ausschluß der Umgebungsluft erfolgt, und bei dem ferner eine Reinigung des Rauchgases in einer Rauchgas-Reinigungsanlage erfolgt.

Ein derartiges Verfahren ist aus der US-A-5 179 903 bekannt. Innerhalb des Rauchgaskreislaufes, der dort eine erste Verbrennungszone (1), eine zweite Verbrennungszone (2), eine Kühlzone (3), eine Feststofftrennzone (4), ein Gebläse (30), eine Zone zur Erzeugung synthetischer Luft (5) und einen Wärmetauscher (33) umfaßt, ergibt sich somit eine Aufkonzentration von Chlor, Schwermetallen und Schwefeldioxid.

Im Hinlick auf den hohen Anteil des im Kreislauf umlaufenden Rauchgases an der insgesamt entstehenden Rauchgasmenge, nämlich ein Fünftel bis die Hälfte, ist diese Aufkonzentration nach der Anfahrphase erheblich und führt auch zu einem entsprechenden Anstieg der Konzentration von Chlor, Schwermetallen und Schwefeldioxid in dem Teil des Rauchgases, der über eine Reinigungsanlage (wet gas scrubbing zone (6)) und eine weitere Reinigungszone (7) an die Umgebungsluft abgegeben wird. Entsprechend groß muß die Reinigungsanlage (6) ausgebildet werden, um die Abgabe dieser Bestandteile des Rauchgases in die Atmosphäre zu verhindern. Außerdem führt die Aufkonzentration dieser Bestandteile im Rauchgaskreislauf zur Schädigung der metallischen Bestandteile desselben. Ferner ist die Gefahr des Entweichens dieser Bestandteile an nicht vollkommen dichten Stellen des Kreislaufs gegeben.

Das in der DE-A1-40 26 245 A1 beschriebene Verfahren geht im Prinzip davon aus, zur Verbrennung "reinen Sauerstoff ohne Verdünnung" einzusetzen (siehe Sp. 1, Z. 58; Sp. 3, Z. 47/48, sowie Anspruch 1), um eine erhebliche Reduktion des Volumens, auf das die Anlage ausgelegt werden muß, zu erreichen, erwähnt aber, daß "zur Vermeidung von Überhitzungen" und bei Bedarf abgekühltes Abgas wieder in die Verbrennungskammer zurückgeführt wird und damit der Sauerstoff verdünnt wird (Sp. 2, Z. 43/44 und 50/51). Es ist auch ausgeführt, daß die Verwendung reinen Sauerstoffs, mit oder ohne Verdünnung, die Bildung von Stickoxiden und anderen Emissionen verhindert (Sp. 1, Z. 51/52 und Sp. 2, Z. 9/10). Wegen der Angabe in dieser Veröffentlichung, daß die Abgasrückführung nur "bei Bedarf" und zur Vermeidung einer Überhitzung der Anlage erfolgen soll, jedoch andererseits, daß durch Verwendung reinen Sauerstoffs "ohne Ballast" eine Verkleinerung der Anlage angestrebt wird, ist davon auszugehen, daß die Beimischung von rückgeführtem Rauchgas nur in geringem Umfang und nicht dauernd erfolgt. Das folgt auch daraus, daß die in dieser Druckschrift genannten Temperaturen von 1600°C (Sp. 4, Z. 57) relativ hoch sind.

Nachteilig bei dem bekannten Verfahren ist, sofern je ein Kreislauf und/oder eine Rückführung eines nicht unerheblichen Teils des Abgases erfolgen sollte, daß in dem Kreislauf eine Anreicherung der bei der Verbrennung im Drehrohr entstehenden Schadstoffe erfolgt, die eine Korrosion der Anlage zur Folge haben kann und auch eine größere Auslegung der nachgeschalteten Rauchgas-Reinigungsanlage erforderlich macht. Schließlich bedingt, wie oben schon angedeutet, die Verwendung reinen Sauerstoffs, auch bei Beimischung gekühlten Rauchgases "bei Bedarf", eine erhöhte Temperatur im Drehrohr und eignet sich daher nicht für die Umrüstung bestehender an sich mit atmosphärischer Luft arbeitender Verbrennungsanlagen.

Ganz allgemein ist es bei der Verbrennung von Abfällen (Hausmüll oder Sonderabfälle) von großer Bedeutung, daß die Schadstoffanteile im Rauchgas reduziert werden. Man unterscheidet dabei Primärmaßnahmen, die die Bildung von Schadstoffen verringern sollen, und Sekundärmaßnahmen, die die Abscheidung von Schadstoffen aus dem bei der Verbrennung des Mülls entstehenden Rauchgasen betreffen. Zu den Sekundärmaßnahmen zählen im wesentlichen die Entschwefelung, Entstaubung und Entstickung, ggf. auch das Auswaschen von Halogenverbindungen und Schwermetallen. Dazu verwendet man Rauchgas-Reinigungsanlagen, die den Verbrennungseinrichtungen, seien es nun Müllverbrennungsanlagen oder Kraftwerksfeuerungen, nachgeschaltet sind.

Zur Einhaltung der immer strengeren Grenzwertvorschriften und zur Senkung der Aufwendungen für die Sekundärmaßnahmen, werden die Primärmäßnahmen, d.h. Maßnahmen zur Vermeidung der Schadstoffbildung, immer wichtiger. Diese bestehen z.B. in der Vermeidung der Staubbildung in der Verbrennungsführung und in der Verringerung schwefelhaltiger Schadstoffe bei der Auswahl der Brennstoffe.

Erhebliche Anstrengungen werden zur Reduzierung der Noₓ-Emissionen unternommen. Man kennt sieben verschiedene Stickoxide, von denen Stickstoffmonoxid (NO) und Stickstoffdioxid (NO₂) am stabilsten sind und daher im wesentlichen die Stickoxid-Belastung des Rauchgases ausmachen. Dabei entsteht Stickstoffmonoxid in der Hauptsache bei hinreichend langen Verweilzeiten der Verbrennungsgase im Brennraum bei hohen Temperaturen und genügend Luft ohne eine chemische Reaktionen mit dem Brennstoff. Da die Verbrennungsluft zu 78 % aus Stickstoff und 21 % aus Sauerstoff besteht, machen unter Umständen die aus dem Luftstickstoff gebildeten Stickoxide den größten Teil der Schadstoffbelastung aus. Je nach Brennstoff und Feuerungsart entstehen zwischen 500 und 2000 mg Stickoxide pro m³ Rauchgas. Dabei rechnet man bei Müllverbrennungsanlagen mit einer Kapazität von 100.000 Tonnen Müll pro Jahr mit etwa 860 Mio. Norm-Kubikmeter (Nm³) Rauchgas, bei Sondermüll-Verbrennungsanlagen mit einer Kapazität von 50.000 Tonnen pro Jahr mit etwa 430 Mio. Nm³ Rauchgas.

Die weitere Entwicklung der Primärmaßnahmen ist auch deshalb wichtig, weil die Entstickung von Rauchgasen durch katalytische Reduktion mit Ammoniakgas zu einem bei hohen Temperaturen (200 bis 250°C) und zum anderen nach der Entschwefelung und Entstaubung durchgeführt wird, um den Katalysator zu schonen. Dazu muß das in der Entschwefelungsanlage abgekühlte Rauchgas unter hohem Energiebedarf wieder aufgeheizt werden.

Eine andere Möglichkeit zur Verhinderung der Stickoxidbildung ist die sogenannte pulsierende Verbrennung bei Luftüberschuß. Dabei wir durch Schwingungsgeneratoren die Verbrennungsluft stoßweise (pulsierend) aufgegeben, so daß der Brennstoff und die Verbrennungluft optimal gemischt werden. Aus thermodynamischen und kinetischen Gründen wird so die Stickoxidbildung weitestgehend reduziert, allerdings unter der Voraussetzung, daß mit geeigneten Frequenzen und Amplituden gearbeitet wird (vgl. N. Awerbuch, "Verhinderung der NOₓ-Bildung durch pulsierende Verbrennungsluft", Verfahrenstechnik 26 (1992) Nr. 12 und 27 (1993) Nr. 3). Diese Verfahren sind jedoch sehr aufwendig und nicht für alle Materialien geeignet.

Aufgabe der Erfindung ist es daher, ein Verfahren und eine Vorrichtung zur Reduzierung der Emissionen bei der Verbrennung von Abfällen zu schaffen, bei dem die Emissionen in der in die Atmosphäre gelangenden Abluft weiterhin vermindert sind. Dabei sollen insbesondere herkömmliche Drehrohranlagen einsetzbar sein, d.h. es sollen durch die Verwendung reinen Sauerstoffs keine Temperaturen entstehen, die mit der vorhandenen Auslegung dieser Anlagen inkompatibel sind. Andererseits soll die Bildung von Emissionen, insbesondere von Stickoxiden, drastisch reduziert werden. Dies soll auch so erreicht werden, daß man vorhandene Altanlagen umrüsten kann.

Die Lösung dieser Aufgabe besteht erfindungsgemäß darin, daß die Reinigung des Rauchgases von Chlor, Schwermetall und Schwefeldioxid innerhalb des Kreislaufes erfolgt.

Durch Anordnung des Verfahrensabschnittes, in dem die Reinigung von Chlor, Schwermetall und Schwefeldioxid erfolgt, im Rauchgaskreislauf wird eine Aufkonzentration dieser schädlichen Bestandteile im Kreislauf vermieden. Dadurch wird in dem Rauchgas, das durch Verbrennung der Abfälle in der Verbrennungsanlage entsteht, der Anteil dieser Bestandteile bereits so drastisch gesenkt, daß eine Endreinigung des Teils des Rauchgases, der in die Atmosphäre abgegeben wird, sehr viel geringer ausgelegt werden kann und gleichzeitig sehr viel effektiver ist, wenn nicht gar vollkommen überflüssig wird. Außerdem wird eine Korrosion der Anlagenbereiche, in denen der Kreislauf des Rauchgases geführt wird, vermieden.

Das erfindungsgemäße Verfahren und eine danach arbeitende Vorrichtung senken also nicht nur den Ausstoß der Stickoxide, sondern insgesamt den Ausstoß aller Emissionen, da ein hoher Anteil des Rauchgases und mit ihm somit ein entsprechend hoher Anteil der bei der Verbrennung entstehenden Schadstoffe ja nicht in die Atmosphäre, sondern in die Rauchgasrückführung gelangt und somit im Rauchgaskreislauf bleibt. Ein besonderes Merkmal des Verfahrens ist es daher, daß insgesamt - bezogen auf ein bestimmtes Volumen an zu verbrennendem Abfall - nur ein Teil des Abgases, nämlich soweit es nicht im Kreislauf rückgeführt wird, in die Atmosphäre gelangt. Es erreicht also nur diejenige Rauchgasmenge den Kamin, die bei der Oxidation des Sonderabfalls durch den im Verbrennungsgas enthaltenen Sauerstoff entsteht. Die übrige Rauchgasmenge läuft kontinuierlich im Kreislauf um. Das hat den zusätzlichen Vorteil, daß insgesamt alle Schadstoffe um bis zu 80% reduziert werden. So werden also gleichzeitig die Stickoxidmengen drastisch gesenkt und das Rauchgasvolumen, das die Anlage verläßt, um bis zu 80% vermindert.

Dies soll durch folgendes Zahlenbeispiel verdeutlicht werden: An einer Sonderabfallverbrennunganlage, die mit einer Abgasrückführung gemäß der Erfindung ausgerüstet ist, liegt die Dampfproduktion bei ca. 24 t/h, wenn man ca. 4 t/h Abfall mit einem mitterlen Heizwert von 15 MJ/kg verbrennt. Der Dampf entsteht bei einem Druck von ca. 32 bar und bei einer Temperatur von ca. 350°C. Obwohl aus Gründen der Wärmeübertragung ca. 20.000-40.000 Nm³/h CO₂-haltiges Kreislaufgas zirkulieren, geht als Überschußgas eine Menge von nicht mehr als 6000-7000 Nm³/h über den Kamin in die Umgebung. Aufgrund der hohen volummetrischen Wärmekapazität des CO₂-reichen Verbrennungsgases können die Wärmestromdichten je nach Drehrohrauslegung von 150 KW/m³ auf 200-300 KW/m³ gesteigert werden.

Damit nun im Rauchgaskreislauf keine Aufkonzentration oder Anreicherung der Emissionen erfolgt, besteht ein weiteres Merkmal der Erfindung darin, innerhalb des Kreislaufs die erste Stufe der Rauchgas-Reinigungsanlage vorzusehen, die insbesondere so eingerichtet ist (vgl. Anspruch 9), daß dem Rauchgas Staub, Chlor, Schwermetalle und Schwefeldioxid entzogen werden. Die zweite Stufe der Rauchgas-Reinigungsanlage, durch die der Anteil Rauchgas hindurchgeht, der nicht im Kreislauf zurückgeführt wird, dient dann zur Reinigung von Dioxinen, Furanen, ferner zur Restreinigung von Schwefeldioxid, Schwermetallen und - sofern überhaupt noch erforderlich - von Stickoxiden (Anspruch 10). Diese Aufteilung der Rauchgas-Reinigungsanlage in zwei Stufen und die Einbeziehung der ersten Stufe in den kontinuierlichen Rauchgaskreislauf hat zur Folge, daß eine Anreicherung von Schadstoffen im Kreislauf vermieden wird. Die Anforderungen an diese erste Stufe der Rauchgas-Reinigungsanlage sind insoweit nicht sehr streng, da der in die Atmosphäre abgeleitete "Rest" des die erste Stufe verlassenden Rauchgases in der zweiten Stufe - soweit noch erforderlich - vollends auf die kritischen Grenzwerte herabgereinigt wird.

Dabei ist das Verhältnis von Rauchgas (CO₂) zu Sauerstoff mit 4:1 bis 1:1 angegeben. Ein besonders bevorzugter Bereich ist 2:1 bis 1,5:1. Die Mengenverhältnisse werden zur Beeinflussung der Flammentemperatur in Anpassung an die verschiedenen Materialien, die verbrannt werden, sowie zur Optimierung des gesamten Verbrennungsvorganges gesteuert.

Eine vorteilhafte Weiterbildung der Erfindung sieht vor, daß die Regelung des Verbrennungsvorganges durch Zugabe fluider Stützenergieträger erfolgt (Anspruch 2), insbesondere durch gereinigtes Pyrolysegas und Pyrolyseöl, die in einer vorgeschalteten Pyrolyse erzeugt werden (Anspruch 6). Durch die vorgeschaltete Pyrolyse werden dem Sonderabfall vor der Verbrennung Anteile an heizwertreichen Abfall entzogen. Das Rauchgasvolumen wird dadurch gesenkt. Ein weiterer Vorteil ist, daß gefährliche Giftstoffe wie PCB, Dioxine, Furane, etc. sowie stickstoffhaltige Substanzen zerstört werden. Auf diese Weise wird also die NOₓ-Bildung noch weiter reduziert.

Vorteilhafterweise wird der Sauerstoff in einer Luftzerlegungsanlage mit Hilfe der bei der Verbrennung gewonnenen Prozeßenergie erzeugt (Anspruch 3). Bei der Luftzerlegung erhält man außer Sauerstoff im wesentlichen auch noch Stickstoff, der als Schutzgas bei der der Verbrennung bzw. Pyrolyse vorgeschalteten Zerkleinerung des Sonderabfalls dienen kann (Anspruch 5).

Wenn man die vorgeschaltete Pyrolyse mit heizwertreichem Abfall (Anspruch 7), insbesondere in Form sondermüllähnlicher Abfälle, wie z.B. Kunststoffabfällen oder Autoreifen beschickt, erzielt man zusätzlich einen Energie-Recycling-Effekt. Beträgt die Menge der zu pyrolysierenden Abfälle mindestens 20 bis 25 % der zu verbrennenden Abfälle (Anspruch 8), reicht das so gewonnene Pyrolysegas und Pyrolyseöl aus, um die gesamte Verbrennung autark zu betreiben. Damit ist man nicht mehr auf fossilen Energieträger (Öl, Gas) zur Bereitstellung der Stützenergie angewiesen.

Ein erheblicher Vorteil des erfindungsgemäßen Verfahrens besteht ferner darin, daß die Wärmetransporteigenschaften der erfindungsgemäß gebildeten "synthetischen Luft", bestehend aus Rauchgas (CO₂) und Sauerstoff, sehr viel besser als die der normalen Luft, bestehend aus Stickstoff und Sauerstoff, sind (Anspruch 11, 12). Legt man z.B. der Verbrennungsluft im Normalfall eine Zusammensetzung von 75 Vol.-Prozent Stickstoff, 13,3 Vol.-Prozent Sauerstoff und 11,7 Vol.-Prozent H₂O zugrunde, wobei man ferner von der Dichte der Komponenten bei 1000°C ausgeht, so ergibt sich eine volumenspezifische Wärmekapazität von 0,36 kJ/m³.k. Legt man bei der "synthetischen Luft" gemäß der Erfindung 75 Vol.-Prozent CO₂, 13,3 Vol.-Prozent O₂ und 11,7 Vol.-Prozent H₂O zugrunde, so ergibt sich daraus eine volumenspezifische Wärmekapazität von 0,53 kJ/m³.k. Bei gleichem Volumendurchsätzen ist also der Wärmetransport bei sonst gleichen Bedingungen bei der synthetischen Luft um 47 % besser als bei normaler Luft. Die Prandtl-Zahl liegt bei Luft und synthetischer Luft unter 1, d.h. die räumliche Ausdehnung der thermischen Grenzschicht ist größer als die der aerodynamischen Grenzschicht, was auf einen vergleichbaren Wärmeübergang bei beiden Gasgemischen, bspw. auf Kesselwärme-Übertragungsflächen, schließen läßt. Der dargestellte Unterschied in der Wärmekapazität und die erhöhte Wärmekapazität der synthetische Luft hat die Konsequenz, daß die Verbrennungsleistung bei ansonsten gleicher Auslegung einer Anlage auf das 1,5-fache steigerbar ist. Man kann also, wenn man bestehende Anlagen gemäß der Erfindung umrüstet, gleichzeitig die Leistungsfreisetzung steigern. Dies ist ein weiterer ganz bedeutender Vorteil der Erfindung. Sollte sich herausstellen, daß dabei der Wärmeübergang durch die "normale" Dimensionierung der Wärmeübergangsfläche am Kessel zu gering ist, so kann man die Wärmeübertragungsfläche leicht vergrößern.

Aus dieser Steigerung des Wärmedurchsatzes verändert sich gegenüber der herkömmlichen Fahrweise auch die Strömungsgeschwindigkeit. Durch Regelung der Strömungsgeschwindigkeit wird eine stabile Flamme am Brenner und somit ein stabiler Verbrennungsprozeß gewährleistet. Zu diesem Zweck sieht eine vorteilhafte Weiterbildung der Erfindung vor (Anspruch 12), daß in der Leitung zur Rückführung des gereinigten Rauchgases Regelungseinrichtungen angeordnet sind.

Auch bei vollständiger Speisung des Drehrohrs mit synthetischer Luft aus Rauchgas und Sauerstoff ist es immerhin möglich, daß dennoch in dem Verbrennungsraum, z.B. in ein Drehrohr an seinen Dichtungen, Stickstoff enthaltende Luft als "Falschluft" eingezogen wird. Um auch diese Quelle für die Entstehung von NOₓ bei der Verbrennung zu beseitigen, sieht eine vorteilhafte Weiterbildung der Erfindung (Anspruch 15) vor, daß an den Dichtungen Schutzeinrichtungen vorgesehen sind, denen als Schutzgas Rauchgas zugeführt wird.

Ein Ausführungsbeispiel des erfindungsgemäßen Verfahrens wird im folgenden anhand der beigefügten Zeichnungen beschrieben. Es zeigen:
- Figur 1: den Verfahrensablauf;
- Figur 2: ein Detail der in Figur 1 lediglich schematisch angedeuteten Abdichtungseinrichtung 45 am vorderen Ende la des Drehrohres 1.

Der Sonderabfall wird, nachdem der pyrolysierbare Anteil vorher abgetrennt wurde, in einem Drehrohr 1, das als Verbrennungsraum dient, gebracht. Ein regelbarer Energieträger, d.h. ein fluider Brennstoff, wird über Leitungen 2 zugeführt. Dabei kann es sich um fossile Erdenergieträger, wie Öl oder Gas, handeln. Dabei werden Produkte einer vorgeschalteten Pyrolyse 3 eingesetzt. In der Pyrolyse werden heizwertreiche Abfälle (d.h. mit einem Energiegehalt von mehr als 25 J/kg) aus dem Sonderabfallgemisch, z.B. nicht mehr recycelbare Kunststoffe, Elektronikschrott oder Siebüberläufe oder andere heizwerte sonderabfallähnliche Stoffe wie Abfall-Kunststoffe oder Autoreifen bei 480 bis 700°C pyrolysiert. Das gereinigte Pyrolysegas und/oder das Pyrolyseöl werden in die Leitung 2 eingespeist. Die Menge der pyrolysierbaren Abfälle sollte mindestens 40 bis 50 % der Sonderabfallmenge betragen. So ist die Verbrennung der gesamten Anlage energieautark.

Die Brennstoffleitung 2 verzweigt sich in eine Leitung 2a, die zu einem Brenner 4a am vorderen Ende la des Drehrohres 1 führt, und eine Leitung 2b, die zu einem Brenner 4b in einer Nachbrennkammer 5 führt. Das Drehrohr 1 wird über eine Leitung 6, die in das vordere Ende la des Drehrohres 1 mündet, der Brenner 4a über die Leitung 7 mit synthetischer Luft versorgt. Die synthetische Luft wird in einer Mischkammer 21 erzeugt, der einerseits über die Leitung 20 Rauchgas, also im wesentlichen CO₂, und andererseits Sauerstoff zugeführt wird, der in einer Luftzerlegungsanlage 23 hergestellt wird. Diese synthetische Luft wird dem in Strömungsrichtung vorderen Ende la in Nähe des Brenners 4a dem hinteren Ende 1b des Drehrohres 1 zugeführt. Zusammen mit dem über die Leitung 2 zugeführten und aus der Pyrolyse 3 stammenden fluiden Brennstoff, der als Stützenergieträger dient, erfolgt damit die Verbrennung der Abfälle, die dem Drehrohr 1 über eine Hochdruckleitung 60 durch Verpumpen quasi kontinuierlich zugefügt wird.

Der Sonderabfall wird im Drehrohr 1 verbrannt und wandert dabei von einem Bereich niedriger Temperatur von ca. 400 bis 700°C am vorderen Ende la bis zu einem Bereich höherer Temperatur von ca. 1200 bis 1300°C am hinteren Ende 1b. Anschließend gelangt das bei der Verbrennung entstehende Rauchgas in die bereits erwähnte Nachbrennkammer 5, in der der Brenner 4b angeordnet ist, dem die synthetische Luft über die Leitung 8 und ein fluider Brennstoff über die Leitung 2b zugeführt wird. In der Nachbrennkammer 5 erfolgt eine Nachverbrennung. Die ausgebrannte schmelzflüssige Schlacke wird am Ausgang 10 abgezogen und in einem Wasserbad abgeschreckt.

Das Rauchgas gelangt von der Nachbrennkammer 5 in einen Strahlungsteil 11, wo es abgekühlt wird und von dort in einen Abhitzekessel 12 mit einem Konvektionswärmetauscher 13. Das Rauchgas dient dabei unter weiterer Abkühlung zur Erzeugung von Dampf, der zur Stromerzeugung verwendet wird (hier nicht dargestellt).

Anschließend gelangt das abgekühlte Rauchgas, das noch eine Temperatur von etwa 300 bis 400°C aufweist, in eine zweistufige Rauchgas-Reinigungsanlage, deren erste Stufe mit 14 und deren zweite Stufe mit 24 bezeichnet ist. In der ersten Stufe 14 der Rauchgas-Reinigungsanlage erfolgt die Abscheidung von Staub, Chlorverbindungen (insbesondere HCl), Schwefeldioxid und Schwermetallen. Dabei kann die erste Stufe 14 als Folge einzelner Abschnitte, die den einzelnen Reinigungsaufgaben zugeordnet sind, ausgebildet sein. Dem Fachmann ist dies bekannt. Daher ist es im folgenden Zusammenhang im einzelnen nicht näher ausgeführt.

Das in der ersten Stufe 14 der Rauchgas-Reinigungsanlage gereinigte Rauchgas wird zu einem Teil, der mit der Regelklappe 61 eingestellt wird, über die Leitung 20 zurückgeführt, wobei, wie bereits erwähnt, in der Mischkammer 21 reiner Sauerstoff zugemischt wird, um die zur Verbrennung im Drehrohr 1 erforderliche synthetische Luft zu erhalten.

Dabei ist zunächst im Prinzip davon auszugehen, daß der Anteil rückgeführten Rauchgases dem Anteil des Stickstoffs in der normalen Luft (4:1) entspricht. Er kann jedoch geringer gewählt werden, um eine Luftzahl lambda größer 1 zu erzeugen, um dadurch optimale Betriebsbedingungen einzustellen. Die Einstellung wird, wie bereits eingangs ausgeführt, so erfolgen, daß das Verhältnis von Rauchgas zu Sauerstoff hinter der Mischkammer 21 in den Leitungen 6, 7, 8 zwischen 4:1 und 1:1 schwankt. Bevorzugt liegt es im Bereich 2:1 bis 1,5:1.

Dieser Rauchgaskreislauf hat zur Folge, daß das Drehrohr nicht, wie es eine Verbrennung mit reinem Sauerstoff zur Folge hätte, Temperaturen erreicht, die für herkömmliche Verbrennungstechnologien zu hoch sind. Andererseits verbleibt ein Großteil des bei der Verbrennung entstehenden Rauchgases im kontinuierlichen Rauchgaskreislauf. Von Bedeutung ist, daß innerhalb des Kreislaufes in der ersten Stufe 14 der Rauchgas-Reinigungsanlage ein ständiges Auswaschen der schädlichen Emissionsanteile im Rauchgas erfolgt. Die Reinigung in der ersten Stufe 14 ist so ausgelegt, daß sich im Kreislauf keine Anreicherung dieser Anteile ergibt, die - z.B. bei HCl - zur Korrosion der Verbrennungsanlage oder zur Erhöhung der Emission von Schadstoffen in dem Anteil des Rauchgases, der ins Freie gelangt, führen könnten. Diese ständige Reinigung des Rauchgases im Kreislauf hat zur Folge, daß der Anteil von schädlichen Abgasen in dem Teil des Rauchgases, der über die Leitung 19 und dann nach der zweiten Stufe 24 der Rauchgas-Reinigungsanlage schließlich über den Kamin 27 ins Freie gelangt, gegenüber herkömmlichen Anlagen schon deshalb erheblich reduziert ist, weil insgesamt der Teil des in die Atmosphäre abgegebenen Rauchgases sehr viel geringer als bei herkömmlichen Anlagen ist. Die Rauchgasmenge kann von etwa 7,5 x 10³ m³ pro Tonne bei bekannten Verfahren auf etwa 1,5 x 10³ m³ pro Tonne Sonderabfall reduziert werden.

Insbesondere erfolgt eine Verringerung der Stickoxide bei dieser Form der Verbrennung des Abfalls im Drehrohr 1 mit synthetischer Luft dadurch, daß ja die synthetische Luft kaum Stickstoff mehr enthält, so daß im Drehrohr 1 auch nicht mehr durch Verbrennung des Luftstickstoffes Stickoxide gebildet werden können.

Über die Leitung 19 gelangt der Teil des Rauchgases, der nicht in der Leitung 20 in den kontinuierlichen Rauchgaskreislauf zurückgeführt wird, an die zweite Stufe 24, in der die Restreinigung des Rauchgases erfolgt, so insbesondere bezüglich Rest-Schwefeldioxid und Rest-Schwermetallen. Außerdem ist dort die Reinigung von Dioxinen und Furanen in entsprechenden Abscheideeinrichtungen vorgesehen. Evtl. kann, falls je erforderlich, dort auch eine Restreinigung von Stickoxiden erfolgen, falls diese dennoch gebildet werden, weil durch Undichtigkeiten im gesamten System natürliche Luft eingezogen wird oder weil in dem zur Verbrennung gelangenden Abfall Stickstoffverbindungen enthalten waren.

Wie bereits eingangs dargelegt, ist die Verbrennungsleistung eines solchen Systems infolge der höheren Wärmekapazität der synthetischen Luft im Vergleich zu herkömmlichen Anlagen um ca. das 1,5-fache erhöht. Diese Steigerung der Verbrennungsleistung führt auch - im Verhältnis von den Abmessungen her konventionell ausgelegten Verbrennungsanlagen - zu einer veränderten Strömungsgeschwindigkeit, die u.U. zu Abrissen der Flamme des Brenners 4a dienen kann. Dem kann dadurch begegnet werden, daß die Strömungsgeschwindigkeit in den Leitungen 6, 7, 8 geregelt wird. Zu diesem Zweck sind dort Regelungseinrichtungen 40, 41, 42 vorgesehen.

Um zu vermeiden, daß an den Dichtungsstellen des Drehrohrs 1 Falschluft eingezogen wird, deren Stickstoffanteile zu Stickoxiden im Rauchgas führen könnte, sind die Dichtungen des Drehrohres 1 mit Kammern 45 am vorderen Ende la und 46 am rückwärtigen Ende 1b versehen, denen über die Leitungen 51, 52 ebenfalls Rauchgas zugeführt wird. Dieses Rauchgas dient bei den Dichtungen als Schutzgas und verhindert das Einziehen von normaler Stickstoff enthaltenden Luft.

Der reine Sauerstoff, der der Mischkammer 21 über die Leitung 22 zugeführt wird, wird in einer Luftzerlegungsanlage 23 gewonnen. Der in der Luftzerlegungsanlage 23 anfallende Stickstoff kann wieder als Schutzgas dienen, und zwar sowohl einerseits - dies wäre eine Modifikation des in der Zeichnung dargestellten Ausführungsbeispiels - bezüglich der Dichtung des Drehrohrsystems, aber auch in der (nicht gezeigten) Zerkleinerungsanlage, in der der Sondermüll vorkonditioniert und für die Verbrennung vorbereitet wird. Das Schutzgas dient dabei zur Unterdrückung der Bildung explosiver Gemische.

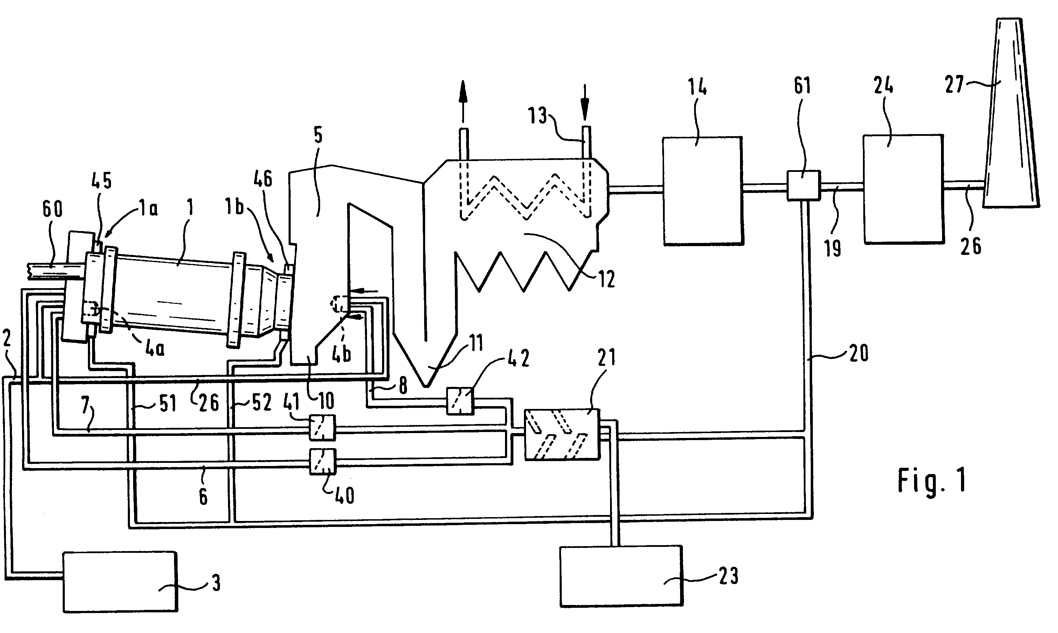

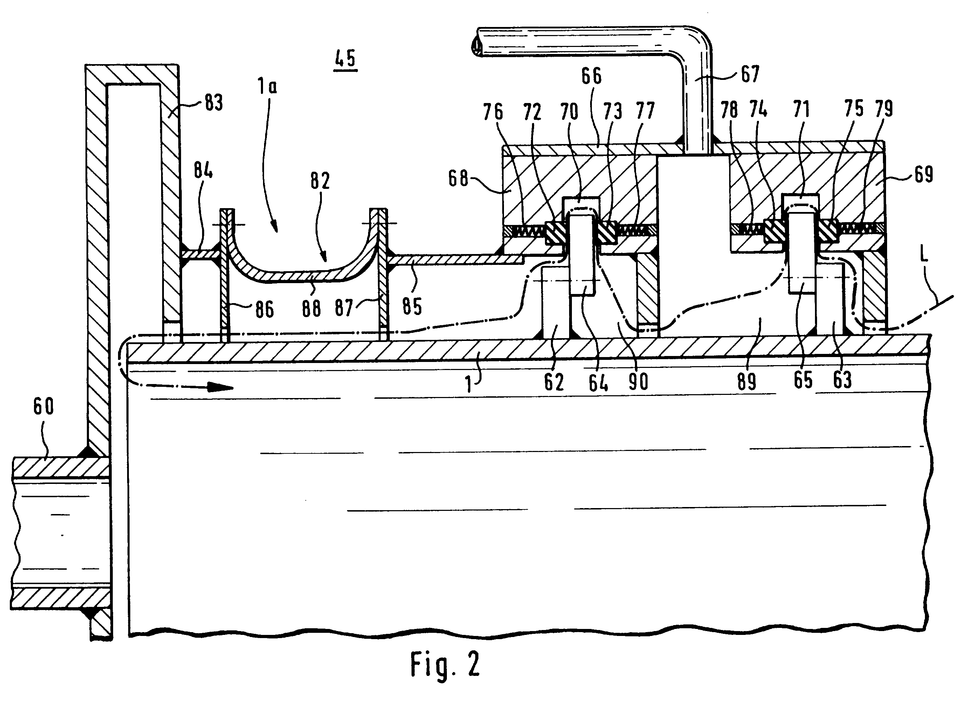

Eine detaillierte Ausbildung der Abdichtungseinrichtung 45 am vorderen Ende 1a des Drehrohrs 1 zeigt Figur 2. Das Drehrohr 1 ist mit zwei Flanschen 62 und 63 versehen, an die Ringe 64 und 65 angeschraubt sind. Die Verschraubung ist durch die strichpunktierten Linien angedeutet. Die Ringe 64, 65 sind aus Montagegründen unterteilt. An dieser Stelle wird das Drehrohr 1 von einem stationären Ringabschnitt 66 umgeben, in dem die Leitung 67, über die Rauchgas zugeführt wird, mündet. Die Leitung 67 in Figur 2 hat dieselbe Funktion wie die Leitung 51 in Figur 1. An dem Ringabschnitt 66 sind zwei im Querschnitt U-förmige Dichtungstragringe 68, 69 angebracht, die jeweils im Querschnitt rechteckige Ausnehmungen 70, 71 aufweisen, die die Ringe 64, 65 umgeben. In den Seitenflächen der Ausnehmungen 70, 71 sind Dichtungsringe 72, 73, sowie 74, 75 aufgenommen. Sie werden von Gruppen von Federn 76, 77, 78, 79 gegen sich mit dem Drehrohr 1 mitdrehenden Ringe 64, 65 gedrückt und bilden so eine Gleitringdichtung. An die Dichtungstragringe 68, 69 sind weitere Flansche 80, 81 angeschweißt. Bei den Dichtungen handelt es sich um bekannte sog. "Burgmann-Dichtungen".

Nach links schließt sich in Figur 2 an die beiden Burgmann-Dichtungen ein Kompensator 82 an. Der Kompensator 82 ist an den Kasten 83, der die Stirnwand des Drehrohrofens bildet, angeschweißt. Der Kompensator besteht aus zwei Ringabschnitten 84, 85, zwei senkrecht zur Achse des Drehrohrs stehenden Ringen 86, 87 und einem U-förmigen Kompensationsteil 88. Der Ringabschnitt 85 ist innen mit dem Dichtungstragring 68 verschweißt. Der Kompensator 82 dient zum Ausgleich von Längenveränderungen in Folge der Erhitzung.

In dem vorderen (in Figur 2: linken) Ende des Drehrohrs herrscht ein Druck von ca. minus 4 - 5 mbar. Da der Druck außerhalb des Drehrohres beispielsweise 1000 mbar ist, besteht also zwischen außen und innen eine erhebliche Druckdifferenz. Ohne besondere Maßnahmen würde sie dazu führen, daß entlang der strichpunktiert eingezeichneten Linie L atmosphärische Luft in das Drehrohr 1 eingezogen wird. Das hätte die Wirkung, daß der in der eingezogenen Falschluft enthaltene Stickstoff im Drehrohr Stickoxide bilden kann. Um dies zu vermeiden, ist vorgesehen, daß über die Leitung 67, wie erwähnt, Rauchgas, und zwar ebenfalls mit einem Druck von 1000 mbar zugeführt wird. Das Rauchgas füllt dann die Räume 89 und 90. Dies hat zur Folge, daß an der Stelle, an der der Dichtungsring 75 auf den Ring 65 drückt, kein Druckgefälle mehr besteht, so daß keine Falschluft entlang der strichpunktiert eingezeichneten Linie L mehr angesaugt wird. Wird andererseits aus den Räumen 89, 90 durch die Dichtung am Ring 64 Rauchgas in das Drehrohr eingesaugt, so kann dies nicht zu einer thermischen Stickoxidbildung führen, da dieses bei der gezeigten Anordnung keinen Stickstoff enthält. Auf diese Weise wird also eine wirksame Schutzgas-Abdichtung erzielt.

## Patentansprüche

1. Verfahren zur Reduzierung der Emissionen bei der Verbrennung von Abfällen in einer Verbrennungsanlage, bei dem ein Teil des bei der Verbrennung entstehenden Rauchgases als kontinuierlicher Kreislauf an den Eingang der Verbrennungsanlage zurückgeführt wird, bei dem dem zurückgeführten Rauchgas der zur Verbrennung erforderliche Sauerstoff als reiner Sauerstoff zur Bildung einer aus Rauchgas und reinem Sauerstoff zusammengesetzten synthetischen Luft zugemischt wird, wobei das Verhältnis von Rauchgas und Sauerstoff 4:1 bis 1:1, vorzugsweise 2:1 bis 1,5:1 ist, und bei dem dann die Verbrennung unter Ausschluß der Umgebungsluft erfolgt, und bei dem ferner eine Reinigung des Rauchgases in einer Rauchgas-Reinigungsanlage erfolgt, **dadurch gekennzeichnet,** daß die Reinigung des Rauchgases von Chlor, Schwermetall und Schwefeldioxid durch eine Rauchgasreinigungsanlage (14) erfolgt, die innerhalb des durch die Verbrennungskammer (1, 5), die Einrichtung (61) zur Rückführung eines Teils des Rauchgases, eine Mischkammer (21) zur Bildung der synthetischen Luft und eine Rückführungsleitung (6, 7, 8) für die synthetische Luft zur Verbrennungskammer (1, 5) gebildeten Kreislaufs zwischen der Verbrennungskammer (1, 5) und der Einrichtung (61) zur Rückführung eines Teils des Rauchgases angeordnet ist.

2. Verfahren nach Anspruch 1, dadurch gekennzeichnet, daß der zugeführte Sauerstoff durch fraktionierte Destillation, Membran-Trennverfahren oder Druckwechselabsorption aus Luft erzeugt und die dafür nötige Energie zum Teil aus der Abwärme der Verbrennung gewonnen wird.

3. Verfahren nach Anspruch 2, dadurch gekennzeichnet, daß das stickstoffreiche Restgas, das bei der Sauerstofferzeugung entsteht, als Schutzgas bei der Sonderabfallvorbehandlung verwendet wird.

4. Verfahren nach Anspruch 1 oder einem der folgenden, dadurch gekennzeichnet, daß als regelbare Stützenergieträger Pyrolyseprodukte, insbesondere gereinigtes Pyrolysegas oder Pyrolyseöl, eingesetzt werden, die bei einer pyrolytischen Vorbehandlung der zur Verbrennung gelangenden Stoffe gewonnen werden.

5. Verfahren nach Anspruch 4, dadurch gekennzeichnet, daß als pyrolysierbarer Abfall der heizwertreiche Anteil des Sonderabfalls und/oder sonderabfallähnliche Stoffe und/oder nicht wieder aufarbeitbare Abfallstoffe eingesetzt werden.

6. Verfahren nach Anspruch 4, dadurch gekennzeichnet, daß die Menge des zur Pyrolyse eingesetzten Abfalls mindestens 20 bis 25 % des zu verbrennenden Abfalls beträgt.

7. Verfahren nach Anspruch 1 oder einem der folgenden, dadurch gekennzeichnet, daß das der Rauchgasanteil in einer zweiten Stufe (24) der Rauchgasreinigungsanlage von Dioxinen, Furanen, vom Restgehalt an Schwefeldioxid, vom Restgehalt an Schwermetallen und vom noch vorhandenen Restgehalt an Stickoxiden gereinigt wird.

8. Verfahren nach Anspruch 1 oder einem der folgenden, dadurch gekennzeichnet, daß die Rückführung von Verbrennungsgasen in den Kreislaufbetrieb die volumenspezifische Wärmekapazität des Kreislaufgases bis zum 1,5-fachen steigert und die volumenspezifische Leistungsfreisetzung bei der Verbrennung ebenfalls um bis zum 1,5-fachen anhebt.

9. Einrichtung zur Durchführung des Verfahrens nach Anspruch 1 oder einem der folgenden mit einem Verbrennungsraum (1, 5), einer in Strömungsrichtung hinter dem Verbrennungsraum angeordneten Einrichtung (61) zur Abzweigung eines Teils des Rauchgases und einer in Strömungsrichtung danach angeordneten Mischkammer (21), sowie ferner mit mindestens einer Leitung (6, 7, 8) zur Rückführung der synthetischen Luft zur Verbrennungskammer (1, 5), und bei der zur Reinigung des Rauchgases von Chlor, Schwermetall und Schwefeldioxid zwischen Verbrennungskammer (1, 5) und der Einrichtung (61) zur Abzweigung eines Teils des Rauchgases eine Rauchgasreinigungsanlage (14) angeordnet ist, dadurch gekennzeichnet, daß zur Steuerung der Strömungsgeschwindigkeit des Rauchgases in der Verbrennungskammer (1, 5) getrennte Leitungen (6, 7, 8) mit getrennten Einrichtungen (40, 41, 42) zur Regelung der rückgeführten Menge synthetischer Luft am Eingang des Brenners (4a) und am Eingang der Nachbrennkammer (4b) vorgesehen sind.

10. Einrichtung nach Anspruch 9, dadurch gekennzeichnet, daß in den Leitungen (6, 7, 8) zur Rückführung des in der ersten Stufe (14) der Rauchgasreinigungsanlage (3) gereinigten Rauchgase, Drosselungseinrichtungen (40, 41, 42) vorgesehen sind.

11. Einrichtung nach Anspruch 9, dadurch gekennzeichnet, daß an den Dichtungen des Verbrennungsraumes (1) Schutzeinrichtungen (45 und 46) vorgesehen sind, denen Rauchgas als Schutzgas gegen Einzug von Falschluft zugeführt (51, 52) wird.

12. Einrichtung nach Anspruch 9, dadurch gekennzeichnet, daß die Schutzeinrichtungen (45) durch zwei am Drehrohr (1), das den Verbrennungsraum bildet, angeflanschte Ringe (64, 65) gebildet wird, an die in Dichtungstragringen (68, 69) stationär gehaltene Dichtungsringe (72, 73, 74, 75) angedrückt werden und daß dem Raum (89) zwischen den beiden Ringen (64, 65) Rauchgas zugeführt wird.

13. Verfahren zum Betreiben einer Einrichtung nach Anspruch 12, dadurch gekennzeichnet, daß das dem Raum (89) zugeführte Rauchgas unter einem Druck zugeführt wird, der gleich dem Druck außerhalb des Drehrohres (1) ist.

## Claims

1. A method of reducing the emissions in the incineration of waste in an incinerator in which a part of the flue gas produced in the incineration operation is recycled as a continuous circuit to the intake of the incinerator, in which the oxygen required for the incineration operation is mixed as pure oxygen with the recycled flue gas to form a synthetic air composed of flue gas and pure oxygen, the ratio of flue gas and oxygen being 4:1 to 1:1, preferably 2:1 to 1.5:1, and in which then the incineration operation is effected with the exclusion of the ambient air, and in which a flue gas purification operation is also effected in a flue gas purification installation, characterised in that purification of the flue gas is effected by chlorine, heavy metal and sulphur dioxide by means of a flue gas purification installation (14) which is arranged within the circuit formed by the incineration chamber (1, 5), the means (61) for recycling a part of the flue gas, a mixing chamber (21) for forming the synthetic air and a recycling conduit (6, 7, 8) for the synthetic air to the incineration chamber (1, 5), between the incineration chamber (1, 5) and the means (61) for recycling a part of the flue gas.

2. A method according to claim 1 characterised in that the oxygen supplied is produced from air by fractional distillation, a membrane separation process or pressure change absorption and the energy required therefor is obtained in part from the waste heat of the incineration operation.

3. A method according to claim 2 characterised in that the nitrogen-rich residual gas which is produced in the oxygen-production procedure is used as a protective gas in the preliminary treatment of special waste.

4. A method according to claim 1 or one of the following claims characterised in that pyrolysis products, in particular purified pyrolysis gas or pyrolysis oil, which are obtained in a pyrolytic preliminary treatment of the substances which undergo incineration are used as regulatable supporting energy carriers.

5. A method according to claim 4 characterised in that the component of the special waste which has a high calorific value and/or special waste-like substances and/or waste substances which cannot be reprocessed again are used as pyrolysable waste.

6. A method according to claim 4 characterised in that the amount of the waste used for the pyrolysis operation is at least 20 to 25% of the waste to be incinerated.

7. A method according to claim 1 or one of the following claims characterised in that the flue gas component is purified in a second stage (24) of the flue gas purification installation of dioxins, furans, the residual content of sulphur dioxide, the residual content of heavy metals and the still remaining residual content of nitrogen oxides.

8. A method according to claim 1 or one of the following claims characterised in that recycling of incineration gases into the circulation system increases the volume-specific thermal capacity of the circulation gas up to 1.5 times and also raises the volume-specific liberation of power in the incineration operation by up to 1.5 times.

9. Apparatus for carrying out the method according to claim 1 or one of the following claims including an incineration chamber (1, 5), a means (61) arranged downstream of the incineration chamber in the flow direction for branching off a part of the flue gas and a mixing chamber (21) arranged downstream thereof in the flow direction, and also including at least one conduit (6, 7, 8) for recycling the synthetic air to the incineration chamber (1, 5) and in which for purification of the flue gas in respect of chlorine, heavy metal and sulphur dioxide a flue gas purification installation (14) is arranged between the incineration chamber (1, 5) and the means (61) for branching off a part of the flue gas, characterised in that for controlling the flow speed of the flue gas in the incineration chamber (1, 5) there are provided separate conduits (6, 7, 8) with separate means (40, 41, 42) for regulating the recycled amount of synthetic air at the intake of the burner (4a) and at the intake of the post-combustion chamber (4b).

10. Apparatus according to claim 9 characterised in that throttle means (40, 41, 42) are provided in the conduits (6, 7, 8) for recycling of the flue gas purified in the first stage (14) of the flue gas purification installation (3).

11. Apparatus according to claim 9 characterised in that provided at the seals of the incineration chamber (1) are protective devices (45, 46) to which flue gas is fed as a protective gas to prevent spurious air from being drawn in (51, 52).

12. Apparatus according to claim 9 characterised in that the protective device (45) is formed by two rings (64, 65) which are flange-mounted on the rotary tube (1) forming the incineration chamber and against which are pressed sealing rings (72, 73, 74, 75) held stationarily in seal support rings (68, 69), and that flue gas is supplied to the space (89) between the two rings (64, 65).

13. A method of operating an apparatus according to claim 12 characterised in that the flue gas supplied to the space (89) is supplied under a pressure which is equal to the pressure outside the rotary tube (1).

## Revendications

1. Procédé pour la réduction des émissions lors de la combustion de déchets dans une installation d'incinération, dans lequel une partie des fumées qui se forment au cours de la combustion est ramenée en un circuit continu à l'entrée de l'installation de crémation, dans lequel on mélange avec les fumées réintroduites l'oxygène nécessaire à la combustion sous forme d'oxygène pur afin de former une atmosphère synthétique à partir des fumées et d'oxygène pur mélangés, le rapport des fumées à l'oxygène allant de 4/1 à 1/1, de préférence de 2/1 à 1,5/1, et dans lequel la combustion se déroule ensuite à l'exclusion de l'air environnant, et dans lequel, en outre, une épuration des fumées a lieu dans un dispositif d'épuration des fumées, caractérisé en ce que l'extraction dans les fumées du chlore, des métaux lourds et du dioxyde de soufre est réalisée dans un dispositif d'épuration des fumées (14) qui est agencé au sein du circuit formé par la chambre de combustion (1, 5), le dispositif (61) de réintroduction d'une partie des fumées, une chambre de mélange (21) pour la formation de l'atmosphère synthétique et une conduite de recirculation (6, 7, 8) pour amener l'atmosphère synthétique vers la chambre de combustion (1, 5), entre la chambre de combustion (1, 5) et le dispositif (61) de réintroduction d'une partie des fumées.

2. Procédé selon la revendication 1, caractérisé en ce que l'oxygène que l'on fait circuler est fabriqué par distillation fractionnée, procédé de séparation par membrane ou absorption à variation de pression, à partir d'air, et l'énergie nécessaire à cet effet est tirée en partie de la chaleur perdue de la combustion.

3. Procédé selon la revendication 2, caractérisé en ce que le gaz résiduel riche en azote qui se forme lors de la fabrication de l'oxygène est utilisé comme gaz de protection lors du traitement préalable de déchets spéciaux.

4. Procédé selon la revendication 1 ou l'une des suivantes, caractérisé en ce que l'on utilise comme vecteurs réglables de l'énergie de soutien des produits de pyrolyse, en particulier du gaz de pyrolyse ou de l'huile de pyrolyse épurés, lesquels sont récupérés au cours d'un traitement préalable pyrolytique des substances amenées pour la combustion.

5. Procédé selon la revendication 4, caractérisé en ce que l'on utilise comme déchets pouvant être pyrolysés la partie riche en valeur calorifique des déchets spéciaux et/ou des substances du même type que les déchets spéciaux et/ou des substances de type déchets ne pouvant plus être réutilisées.

6. Procédé selon la revendication 4, caractérisé en ce que la quantité des déchets utilisés pour la pyrolyse correspond à au moins 20 à 25 % des déchets devant être brûlés.

7. Procédé selon l'une quelconque des revendications 1 à 6, caractérisé en ce que la partie des fumées, au cours d'une deuxième étape (24) du dispositif d'épuration des fumées, est épurée des dioxines, des furanes, de la teneur résiduelle en dioxyde de soufre, de la teneur résiduelle en métaux lourds et de la teneur résiduelle encore présente en oxydes d'azote.

8. Procédé selon l'une quelconque des revendications 1 à 7, caractérisé en ce que la réintroduction de gaz de combustion dans l'exploitation en circuit accroît la capacité calorifique volumique du gaz du circuit, jusqu'à 1,5 fois, et élève la puissance libérée volumique au cours de la combustion, également jusqu'à 1,5 fois.

9. Installation destinée à l'exécution du procédé selon l'une quelconque des revendications 1 à 8 comportant une chambre de combustion (1, 5), un dispositif (61) agencé dans la direction de l'écoulement derrière la chambre de combustion, pour la déviation d'une partie des fumées, et une chambre de mélange (21) agencée à la suite dans la direction de l'écoulement, ainsi qu'au moins une conduite (6, 7, 8) pour la recirculation de l'atmosphère synthétique vers la chambre de combustion (1, 5), et dans laquelle, pour l'extraction dans les fumées du chlore, des métaux lourds et du dioxyde de soufre, une installation d'épuration des fumées (14) est agencée entre la chambre de combustion (1, 5), et le dispositif (61) pour la déviation d'une partie des fumées, caractérisée en ce qu'elle comporte, pour la régulation de la vitesse d'écoulement des fumées dans la chambre de combustion (1, 5), des conduites séparées (6, 7, 8) avec des dispositifs séparés (40, 41, 42) pour la régulation de la quantité d'atmosphère synthétique réintroduit à l'entrée de la chambre de combustion et à l'entrée de la chambre de post-combustion (4b).

10. Installation selon la revendication 9, caractérisée en ce que dans les conduites (6, 7, 8) pour la recirculation des fumées épurées au cours de la première étape (14) du dispositif d'épuration des fumées (3), sont prévus des dispositifs d'étranglement (40, 41, 42).

11. Installation selon la revendication 9, caractérisée en ce que, au niveau des joints d'étanchéité de la chambre de combustion (1), sont prévus des dispositifs de protection (45 et 46) vers lesquels des fumées sont amenées (51, 52) comme gaz de protection contre l'entrée accidentelle d'air.

12. Installation selon la revendication 9, caractérisée en ce que les dispositifs de protection (45) sont formés par deux bagues (64, 65), placées avec des flasques sur le tube rotatif (1) qui forme la chambre de combustion, contre lesquelles sont pressés des anneaux d'étanchéité (72, 73, 74, 75) maintenus immobiles dans des porte-anneaux d'étanchéité (68, 69), et en ce que l'on introduit des fumées dans l'espace (89) entre les deux bagues (64, 65).

13. Procédé pour l'exploitation d'une installation selon la revendication 12, caractérisé en ce que les fumées sont introduites dans l'espace (89) sont introduites sous une pression qui est la même que la pression à l'extérieur du tube rotatif (1).
